# EUROPÄISCHE PATENTANMELDUNG

(11) **EP 2 261 634 A2**
(43) Veröffentlichungstag der Anmeldung: **15.12.2010**
(21) Anmeldenummer: 10005798.3
(22) Anmeldetag: 04.06.2010
(51) Int. Cl.: G01N 3/08, G01N 3/00, G01N 3/02, G01N 3/04

(54) **Vorrichtung zum Testen von plattenförmigen Werkstücken**

(30) Priorität: 09.06.2009 DE 102009024383
(71) Anmelder: euroTECH GmbH, 72351 Geislingen (DE)
(72) Erfinder: Bunnenberg, Peter, D-72348 Rosenfeld (DE); Bossert, Gerhard, D-72160 Horb (DE)
(74) Vertreter: Kohler Schmid Möbus

(57) **Zusammenfassung**

Eine Vorrichtung zum Testen von plattenförmigen Werkstücken auf Druck- und/oder Zugbelastung mit einem Grundgestell (1), an dem mindestens eine Werkstückaufnahme und mindestens eine Messbrücke (5) angeordnet sind, wobei an der Messbrücke (5) mindestens ein Vakuumsauger (16) angeordnet ist, der mit einer einstellbaren Druckkraft gegen das Werkstück anstellbar und, eine einstellbare Zugkraft auf das Werkstück ausübend, zurückbewegbar ist.

## Beschreibung

Die Erfindung betrifft eine Vorrichtung zum Testen von plattenförmigen Werkstücken auf Druck- und Zugbelastung.

Bei flächigen Werkstücken wie Solarpaneelen, Fassadenelementen, Fenstern mit Rahmen oder Verkehrsschildern ist es für die Qualitätssicherung und auch aus Sicherheitsgründen wünschenswert, die maximale Belastbarkeit und/oder die maximale Durchbiegung eines Werkstücks zu kennen, bevor dieses bricht oder aus dem umgebenden Rahmen gerissen wird.

Bei Solarpaneelen ist außerdem eine Stimulation von Belastungen durch Schneedruck, Windeinwirkung und anderen Wettereinflüssen von Interesse. Die gewonnenen Erkenntnisse können für die Produktweiterentwicklung verwertet werden. Auch als Nachweis für das Einhalten bestimmter Sicherheitsstandards sind solche Simulationsergebnisse von Interesse.

Der vorliegenden Erfindung liegt daher die Aufgabe zugrunde, eine für unterschiedliche Werkstücke einsetzbare Testvorrichtung zu schaffen, mit der das Verhalten der Werkstücke auf Druck- und/oder Zugbelastung geprüft werden kann.

Die Aufgabe wird gelöst durch eine Vorrichtung zum Testen von plattenförmigen Werkstücken auf Druck- und/oder Zugbelastung mit einem Grundgestell, an dem mindestens eine Werkstückaufnahme und mindestens eine Messbrücke angeordnet sind, wobei an der mindestens einen Messbrücke mindestens ein Vakuumsauger angeordnet ist, der mit einer einstellbaren Druckkraft gegen das Werkstück anstellbar und, eine einstellbare Zugkraft auf das Werkstück ausübend, zurückbewegbar ist.

Mithilfe des mindestens einen Vakuumsaugers kann auf das plattenförmige Werkstück sowohl eine Druckbelastung als auch eine Zugbelastung ausgeübt werden. Ist nur ein Vakuumsauger vorhanden, so können punktuelle Belastungen simuliert werden. Durch das Vorsehen mehrerer Vakuumsauger können dagegen auch Flächenbelastungen getestet werden.

Dabei ist es von Vorteil, wenn der mindestens eine Vakuumsauger verstellbar an der Messbrücke angeordnet ist. Damit lassen sich verschiedenformatige Werkstücke problemlos testen. Außerdem können gezielt einzelne Bereiche des Werkstücks mit einer Druck- und/oder Zugkraft beaufschlagt werden.

Weitere Vorteile in dieser Hinsicht ergeben sich, wenn mehrere Vakuumsauger an der mindestens einen Messbrücke relativ zueinander verstellbar angeordnet sind. Die Vakuumsauger können an den gewünschten Positionen über dem Werkstück verfahren und dort arretiert werden. Auch die mindestens eine Messbrücke kann längs der mindestens einen Werkstückaufnahme verfahrbar am Grundgestell angeordnet sein. Dadurch können größere Werkstücke sukzessive an mehreren Stellen mit Druck- und Zugkräften beaufschlagt werden.

Um eine möglichst gleichmäßige Flächenbelastung des Werkstücks mit Druck- und Zugkräften zu realisieren ist es dagegen von Vorteil, wenn mehrere Messbrücken vorgesehen sind, die dann vorzugsweise jeweils mehrere Vakuumsauger tragen. Es ist damit möglich, das Werkstück in einem gleichmäßigen Raster mit Druck- und/oder Zugkräften zu beaufschlagen.

Zur Bewegung des mindestens einen Vakuumsaugers bezüglich des Werkstücks kann an der mindestens einen Messbrücke mindestens eine entsprechende Verstelleinrichtung angeordnet sein. Diese Verstelleinrichtung kann beispielsweise einen Pneumatik- oder Hydraulikzylinder und/oder eine motorisch angetriebene Spindel aufweisen. Mit der Verstelleinrichtung kann der Vakuumsauger mit exakt vorgebbaren Kräften gegen das Werkstück drücken bzw. an diesem eine Zugkraft ausüben.

Bei einer bevorzugten Ausgestaltung kann die Vorrichtung eine Kraftmesseinrichtung aufweisen, um die tatsächlich auf das Werkstück ausgeübten Kräfte kontrollieren und auswerten zu können. Die erfassten Messwerte können beispielsweise an eine angeschlossene Auswerte- und Steuereinrichtung weitergegeben und von dieser ausgewertet, angezeigt und/oder ausgedruckt werden. Sind mehrere Verstelleinrichtungen vorhanden, so ist es zweckmäßig, für jede Verstelleinrichtung eine Kraftmesseinrichtung vorzusehen. Die Erfassung und Auswertung der erzeugten Kräfte lässt sich dann über die gesamte Oberfläche des Werkstücks vornehmen. Die Messeinrichtungen erlauben außerdem eine reproduzierbare Wiederholung der Tests.

Weitere Vorteile ergeben sich, wenn die mindestens eine Verstelleinrichtung über eine Querkräfte aufnehmende Kupplung mit der Messbrücke verbunden ist. Dadurch kann ausgeschlossen werden, dass die Verstelleinrichtung durch Deformationen des Werkstücks während des Tests beschädigt wird.

Bei einer bevorzugten Ausgestaltung der erfindungsgemäßen Vorrichtung können mit der mindestens einen Verstelleinrichtung mehrere, an einem gemeinsamen Rahmen angeordnete Vakuumsauger bewegbar sein. Die von der Verstelleinrichtung erzeugte Kraft verteilt sich damit auf alle mit ihr verbundenen Vakuumsauger, sodass eine relativ gleichmäßige Flächenbelastung des Werkstücks erreicht wird. Der Rahmen, an dem die Vakuumsauger gehalten sind, kann gleichzeitig die Vakuumzuführung zu den Vakuumsaugern beinhalten. Dazu kann er beispielsweise aus Hohlprofilen gefertigt sein. Diese Ausgestaltung vermeidet das Verlegen langer Schlauchleitungen.

Weiter können die Vakuumsauger verstellbar an dem Rahmen angeordnet sein, um die gewünschten Bereiche des Werkstücks beaufschlagen zu können.

Damit das Vakuum nicht zusammenbricht, wenn sich das Werkstück während des Tests verformt, ist es außerdem von Vorteil, wenn die Vakuumsauger gelenkig an dem mindestens einen Rahmen angeordnet sind. Sie können dadurch den Bewegungen des Werkstücks folgen.

Die Einsatzmöglichkeit der erfindungsgemäßen Vorrichtung lässt sich außerdem dadurch steigern, dass eine Sensoreinrichtung zur Erfassung der Deformation des Werkstücks vorgesehen ist. Dadurch sind nicht nur Bruchtests des Werkstücks mit der Vorrichtung möglich, sondern auch Tests im Bereich unterhalb der Bruchbelastung.

Sollen mit der Vorrichtung außerdem Wettereinflüsse wie Wind oder Regen simuliert und getestet werden, so können an der mindestens einen Messbrücke gegen das Werkstück gerichtete Luft- und/oder Wasserdüsen angeordnet sein. Zur realitätsnahen Simulation von Windeinflüssen ist es außerdem von Vorteil, wenn am Grundgestell ein Vibrationsantrieb für die mindestens eine Werkstückaufnahme angeordnet ist. Damit kann außerdem das Schwingungsverhalten des Werkstücks getestet werden.

Es ist zudem möglich, bei horizontaler Ausrichtung des Werkstücks oberhalb der Vorrichtung eine Behagelungseinrichtung vorzusehen, um die Widerstandsfähigkeit des Werkstückmaterials gegen Hagelschlag zu testen. Eventuell auftretende Oberflächenbeschädigungen können visuell oder mithilfe einer Kamera erfasst und ausgewertet werden.

Nachfolgend wird ein bevorzugtes Ausführungsbeispiel einer erfindungsgemäßen Vorrichtung anhand der Zeichnung näher beschrieben.

Im Einzelnen zeigen:
- Fig. 1: eine Seitenansicht einer erfindungsgemäßen Vorrichtung;
- Fig. 2: eine vergrößerte Detaildarstellung der Vorrichtung aus Fig. 1;
- Fig. 3: eine Stirnansicht der Vorrichtung aus Fig. 1;
- Fig. 4: eine Draufsicht auf die Vorrichtung aus Fig. 1.

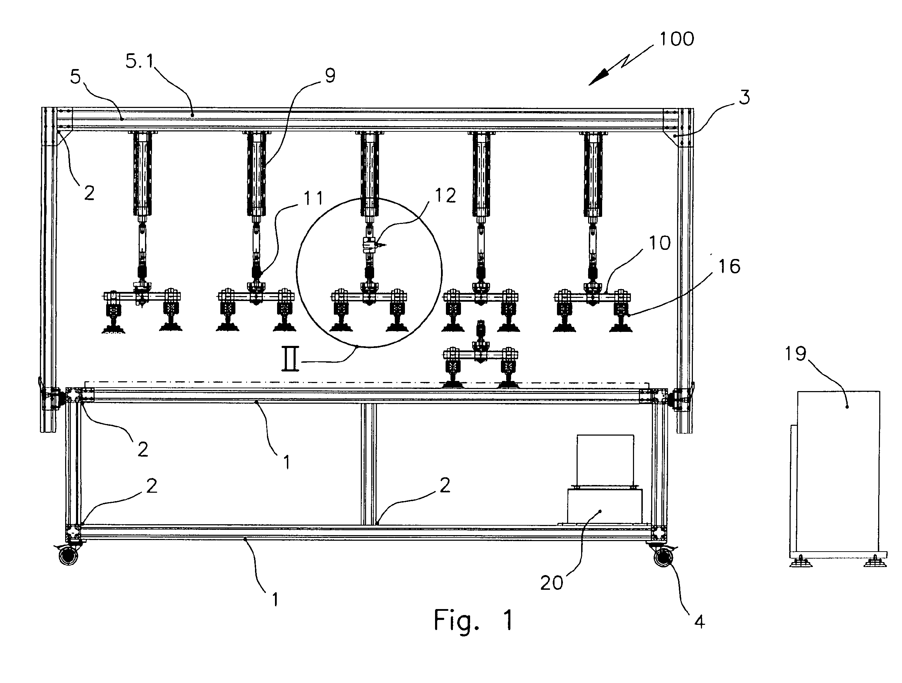

Die in Fig. 1 in der Seitenansicht gezeigte Vorrichtung 100 zum Testen von plattenförmigen Werkstücken weist ein Grundgestell 1 auf, das im Wesentlichen aus Profilen, die aus Aluminium oder Stahl gefertigt sein können, besteht. Je nach Größe des Grundgestells 1 werden die Profile durch Winkel 2 versteift, um keine Verfälschungen der Messergebnisse aufgrund von Verformungen des Gestells 1 zu erhalten. Im dargestellten Beispiel ruht das Grundgestell 1 auf Rollen 4 und kann dadurch an unterschiedlichen Orten eingesetzt werden.

An den Seiten des Grundgestells 1 ist eine Messbrücke 5 senkrecht zur Zeichenebene verschiebbar angeordnet. Dies kann beispielsweise über ein Schienensystem an den Außenseiten des Grundgestells 1 erfolgen. Außerdem können hier nicht gezeigte Arretierungsmittel vorgesehen sein, mit deren Hilfe die Messbrücke 5 in der gewünschten Position am Grundgestell 1 festgelegt werden kann.

Auch die Messbrücke 5 kann vorzugsweise aus Stahl oder Aluminiumprofilen gefertigt sein und mittels Winkeln 2 und/oder Versteifungsblechen 3 stabilisiert sein.

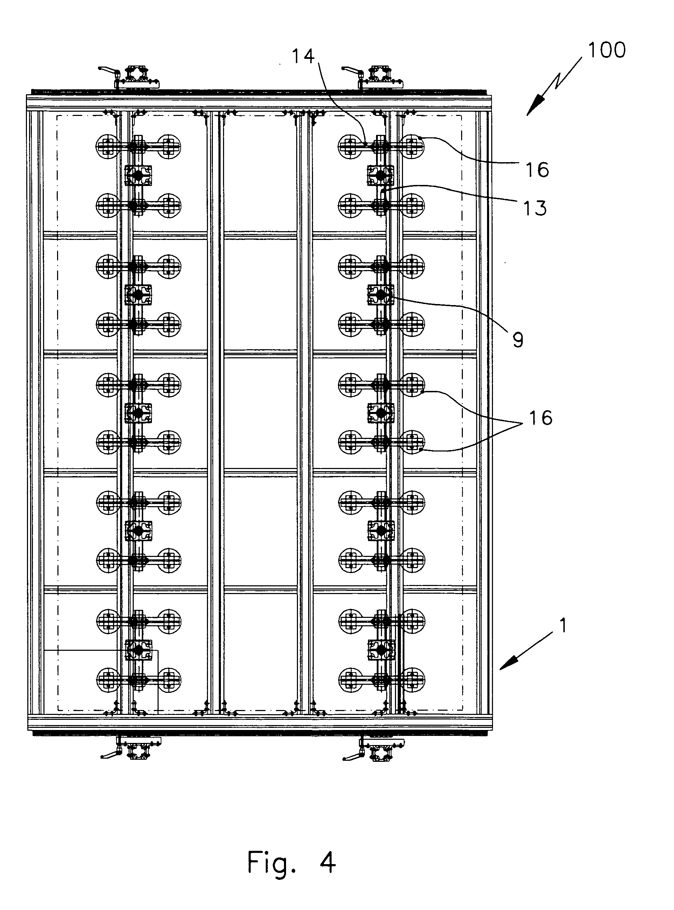

Am oberen Träger 5.1 der Messbrücke 5 sind im dargestellten Beispiel fünf Verstelleinrichtungen 9 installiert, die längs des oberen Trägers 5.1 verschiebbar sind. Die Verstelleinrichtungen 9 bestehen vorzugsweise aus Pneumatik- oder Hydraulikzylindern, können jedoch auch durch motorisch angetriebene Spindeln gebildet werden. Im dargestellten Beispiel sind die Verstelleinrichtungen 9 fest mit dem Träger 5.1 der Messbrücke 5 verbunden. Die Verbindung könnte jedoch auch über eine Kupplung erfolgen, die in der Lage ist, Querkräfte aufzunehmen. Am unteren Ende der Verstelleinrichtungen 9 sind jeweils insbesondere aus Fig. 4 ersichtliche Rahmen 10 angeordnet, die mit mehreren Vakuumsaugern 16 bestückt sind.

Wie Fig. 4 zeigt, bestehen die Rahmen 10 jeweils aus zwei Quertraversen 14 und einer Längstraverse 13. Er ist im dargestellten Beispiel starr an der Verstelleinrichtung 9 angeordnet. Es ist jedoch eine gelenkige Befestigung des Rahmens 10 an der Verstelleinrichtung 9 möglich, damit auftretende Querkräfte aufgenommen werden können.

Mithilfe der Verstelleinrichtung 9 können die Vakuumsauger 16 mit einer einstellbaren Kraft gegen ein hier nicht näher dargestelltes plattenförmiges Werkstück, das auf dem Grundgestell 1 aufliegt, angestellt werden. Anschließend können die Vakuumsauger 16 mittels der Verstelleinrichtungen 9 wieder nach oben bewegt werden, wodurch sie eine Zugkraft auf das Werkstück ausüben.

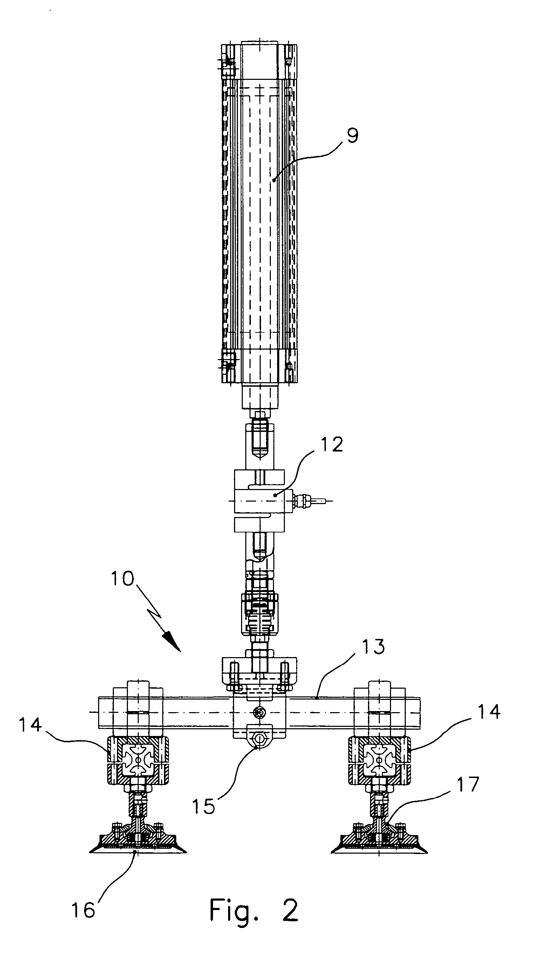

Wie die Detaildarstellung aus Fig. 2 verdeutlicht, ist in jeder Verstelleinrichtung 9 eine Kraftmesseinrichtung 12 vorgesehen. Vom Rahmen 10 zeigt Fig. 2 einen Längsträger 13, der mithilfe einer Klemmeinrichtung 15 verstellbar an der Verstelleinrichtung 9 angeordnet ist. Weiter sind zwei Vakuumsauger 16 zu sehen, die jeweils mittels Gelenken 17 an Querträgern 14 befestigt sind. Somit können sich die Vakuumsauger 16 relativ gut einer Verformung des Werkstücks anpassen. Die Vakuumsauger 16 werden über eine Vakuumeinrichtung 20 (Fig. 1) versorgt. Die von der Messeinrichtung 12 ermittelten Werte werden an eine Steuerungs- und Auswerteeinrichtung 19 (Fig. 1) übergeben.

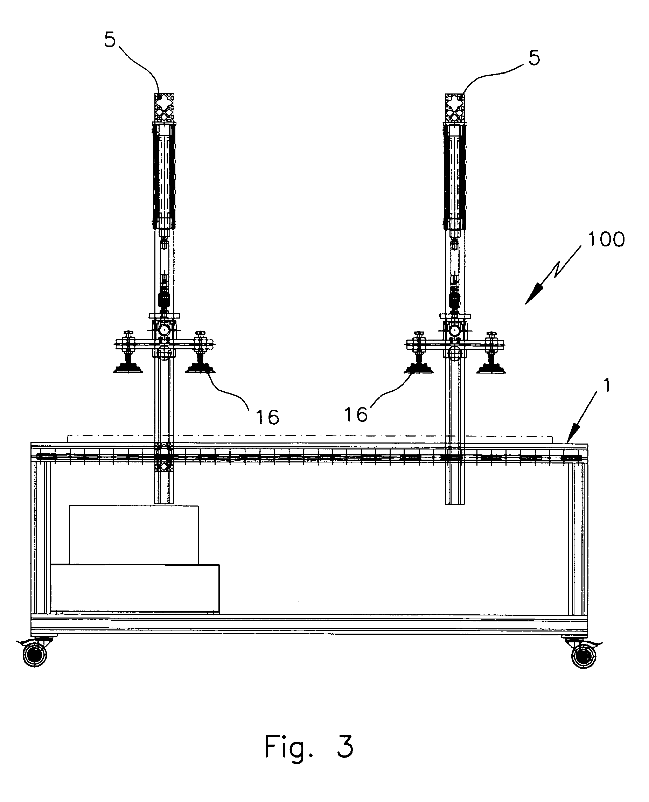

Wie die Stirnansicht auf die Vorrichtung 100 gemäß Fig. 3 zeigt, weist die Vorrichtung 100 zwei identisch ausgebildete Messbrücken 5 auf. Jede der Messbrücken trägt, wie Fig. 4 zeigt, fünf Verstelleinrichtungen 9, an denen wiederum jeweils vier Vakuumsauger 16 befestigt sind. Durch die große Anzahl von Vakuumsaugern 16, die zudem in einem gleichmäßigen gegenseitigen Abstand angeordnet sind, wird das zu untersuchende Werkstück über seine Oberfläche verteilt sehr gleichmäßig beaufschlagt. Durch eine hier nicht dargestellte zusätzliche Messbrücke mit nur einem Vakuumsauger, der verstellbar an der Messbrücke angeordnet ist, könnte aber auch eine punktuelle Druck- oder Zugbelastung des Werkstücks getestet werden.

## Patentansprüche

1. Vorrichtung zum Testen von plattenförmigen Werkstücken auf Druck- und/oder Zugbelastung mit einem Grundgestell (1), an dem mindestens eine Werkstückaufnahme und mindestens eine Messbrücke (5) angeordnet sind, wobei an der mindestens einen Messbrücke (5) mindestens ein Vakuumsauger (6) angeordnet ist, der mit einer einstellbaren Druckkraft gegen das Werkstück anstellbar und, eine einstellbare Zugkraft auf das Werkstück ausübend, zurückbewegbar ist.

2. Vorrichtung nach Anspruch 1, **dadurch gekennzeichnet, dass** der mindestens eine Vakuumsauger (16) verstellbar an der Messbrücke (5) angeordnet ist.

3. Vorrichtung nach Anspruch 1 oder 2, **dadurch gekennzeichnet, dass** mehrere Vakuumsauger (16) an der mindestens einen Messbrücke (5) relativ zueinander verstellbar angeordnet sind.

4. Vorrichtung nach einem der Ansprüche 1 bis 3, **dadurch gekennzeichnet, dass** die mindestens eine Messbrücke (5) längs der mindestens einen Werkstückaufnahme verfahrbar am Grundgestell (1) angeordnet ist.

5. Vorrichtung nach einem der Ansprüche 1 bis 4, **dadurch gekennzeichnet, dass** mehrere Messbrücken (5) vorgesehen sind.

6. Vorrichtung nach einem der Ansprüche 1 bis 5, **dadurch gekennzeichnet, dass** an der mindestens einen Messbrücke (5) mindestens eine Verstelleinrichtung (9) zur Bewegung des mindestens einen Vakuumsaugers (16) angeordnet ist.

7. Vorrichtung nach Anspruch 6, **dadurch gekennzeichnet, dass** die Verstelleinrichtung (9) einen Pneumatik- oder Hydraulikzylinder und/oder eine motorisch angetriebene Spindel aufweist.

8. Vorrichtung nach Anspruch 6 oder 7, **dadurch gekennzeichnet, dass** die mindestens eine Verstelleinrichtung über eine Querkräfte aufnehmende Kupplung mit der Messbrücke (5) verbunden ist.

9. Vorrichtung nach einem der Ansprüche 1 bis 8, **dadurch gekennzeichnet, dass** sie mindestens eine Kraftmesseinrichtung (12) aufweist.

10. Vorrichtung nach Anspruch 9, **dadurch gekennzeichnet, dass** für jede Verstelleinrichtung (9) eine Kraftmesseinrichtung (12) vorgesehen ist.

11. Vorrichtung nach einem der Ansprüche 6 bis 10, **dadurch gekennzeichnet, dass** mit der mindestens einen Verstelleinrichtung (9) mehrere, an einem gemeinsamen Rahmen (10) angeordnete Vakuumsauger (16) bewegbar sind.

12. Vorrichtung nach Anspruch 11, **dadurch gekennzeichnet, dass** der Rahmen (10) die Vakuumzuführung zu dem Vakuumsauger (16) beinhaltet.

13. Vorrichtung nach Anspruch 11 oder 12, **dadurch gekennzeichnet, dass** die Vakuumsauger (16) verstellbar an dem Rahmen (10) angeordnet sind.

14. Vorrichtung nach einem der Ansprüche 11 bis 13, **dadurch gekennzeichnet, dass** die Vakuumsauger (16) gelenkig an dem mindestens einen Rahmen (10) angeordnet sind.

15. Vorrichtung nach einem der Ansprüche 1 bis 14, **dadurch gekennzeichnet, dass** eine Sensoreinrichtung zur Erfassung der Deformation des Werkstücks vorgesehen ist.

16. Vorrichtung nach einem der Ansprüche 1 bis 15, **dadurch gekennzeichnet, dass** an der mindestens einen Messbrücke gegen das Werkstück gerichtete Luft- und/oder Wasserdüsen angeordnet sind.

17. Vorrichtung nach einem der Ansprüche 1 bis 16, **dadurch gekennzeichnet, dass** im Grundgestell (1) ein Vibrationsantrieb für die mindestens eine Werkstückaufnahme angeordnet ist.
